# EUROPEAN PATENT APPLICATION

(11) **EP 4 576 673 A1**
(43) Date of publication of application: **25.06.2025**
(21) Application number: 24220785.0
(22) Date of filing: 17.12.2024
(51) Int. Cl.: H04L 9/40

(54) **LAWFUL INTERCEPTION OF AN ENCRYPTED COMMUNICATION WITH A PROOF-OF- WORK-PROTECTED KEY**

(30) Priority: 19.12.2023 EP 23218152
(71) Applicant: Koninklijke KPN N.V., 3072 AP Rotterdam (NL); Nederlandse Organisatie voor Toegepast-Natuurwetenschappelijk Onderzoek TNO, 2595 DA 's-Gravenhage (NL)
(72) Inventor: Van Deventer, Mattijs Oskar, 2264 DL Leidschendam (NL); De Kok, Willem Adriaan, 9743 LH Groningen (NL); Marinissen, Bart, 9714 DX Groningen (NL)
(74) Representative: De Vries & Metman

(57) **Abstract**

A method of enabling lawful interception of an encrypted communication comprises generating (111) a secret key for a second user and deriving (113) a proof-of-work-protected key from the secret key. The secret key is reconstructable with less cryptographic work with the proof-of-work-protected key than without the proof-of-work-protected key. The method further comprises providing (115) the proof-of-work-protected key to a system of a law enforcement organization, receiving (117), at a system of the second user, an encrypted communication from a system of a first user, and decrypting (119) the encrypted communication with the secret key or with a further secret key generated based on the secret key. This method allows the system of the law enforcement organization to reconstruct (125) the secret key based on the proof-of-work-protected key by performing cryptographic work and decrypt (127) the encrypted communication with or based on the reconstructed secret key.

## Description

### FIELD OF THE INVENTION

The invention relates to a method of enabling lawful interception of an encrypted communication and a method of lawfully intercepting an encrypted communication.

The invention also relates to computer program products enabling systems to perform such methods.

The invention further relates to a system for enabling lawful interception of an encrypted communication and a system for lawfully intercepting an encrypted communication.

### BACKGROUND OF THE INVENTION

Lawful interception has gradually become an all-or-nothing game. In the 20th century, most communications were costly, as each interception required a physical intervention ("wiretapping") as well as human personnel to listen/read to the intercepted communications. In the 21st century, digitization has made lawful interception very cheap. Cost of digital bandwidth, storage and processing has decreased by orders of magnitude. Full automation of the interception process, as well as artificial-intelligence-powered analysis would also reduce the personnel cost tremendously.

Governments worldwide have taken advantage of the new cost structure to strengthen their lawful-interception infrastructure. Whereas democratic countries have proper checks and balances to assure that only subpoenaed communications are lawfully intercepted, this limitation is less about technical cost. Moreover, telecommunications companies and social-media providers are often legally limited ("gag order") in what they can disclose about the nature and volume of their subpoenas. As a result, democratic control is getting more anchored in the trust in the parties involved than in technical/cost limitations.

Cryptographic technologies provide a major counter-pressure against unlimited surveillance. Tech-savvy privacy-aware citizens could use tooling like Pretty-Good-Privacy to encrypt and sign their communications, and keep the content out of the hands of third parties. More recently, WhatsApp and other messaging apps have introduced end-to-end encryption, such that the company itself has no access to the content of the communication. Hence, they cannot be legally compelled to surrender something that they do not have. This way, also less tech-savvy users can have privacy.

The all-or-nothing nature of cryptographic solutions has led to major controversies. Some governments forbid/criminalize apps that use end-to-end encryption. Other governments may require weakening of the cryptographic technologies used, the introduction of back-doors, or pre-encryption interception to be implemented inside of the user application. All of these "solutions" have the technical problem that governments can potentially have unlimited access to the communications of their citizens, but also that citizens are not protected against other eavesdroppers, which may be criminal organizations or foreign state actors.

This contentious nature of cryptographical solutions may be one of the reasons that telecom operators have not been developing end-to-end encryption, despite a growing need for reasonable privacy and confidentiality.

The blog "A Call for Reciprocal Negotiated Accountability" by Daniel Hardman (https://www.evernym.com/blog/a-call-for-reciprocal-negotiated-accountability/). published 15 January 2021, describes that a compromise is needed between perfect oversight (surveillance society) and perfect privacy (unchecked cybercrime, fraud and child porn). The blog provides three examples of what the blog calls "reciprocal negotiated accountability" techniques:
1) Digital watermarks and data terms of service: watermarks maintain the authenticity of shared data, and include metadata with which trusted third party and at what terms the data was shared.
2) Provisional anonymity: requiring two collaborating trusted third parties ("social network providers", "escrow service provider") to jointly decide when to break the anonymity of "Alice".
3) Opt-in Front Door Keys: "Bob" hands his "front-door" crypto key to a trusted third party that vouches to respect Bob's rights and its terms of service.

A drawback of these techniques is their reliance on trusted third parties. If a trusted third party is compromised (e.g. hacked or coerced), then the provided citizen protections have become void, resulting in the "nothing" of the above-mentioned all-or-nothing game.

### SUMMARY OF THE INVENTION

It is a first objective of the invention to provide methods, which can be used to enable lawful interception of encrypted communication without trusted third parties while providing protection against eavesdroppers.

It is a second objective of the invention to provide systems, which can be used to enable lawful interception of encrypted communication without trusted third parties while providing protection against eavesdroppers.

In a first aspect of the invention, a method of enabling lawful interception of an encrypted communication comprises generating a secret key for a second user, deriving a proof-of-work-protected key from the secret key, the secret key being reconstructable with less cryptographic work with the proof-of-work-protected key than without the proof-of-work-protected key, providing the proof-of-work-protected key to a system of a law enforcement organization, receiving, at a system of the second user, an encrypted communication from a system of a first user, and decrypting the encrypted communication with the secret key or with a further secret key generated based on the secret key. The method may be performed by software running on a programmable device. This software may be provided as a computer program product.

By providing the proof-of-work-protected key to the law enforcement organization, the used cryptographic technologies do not need to be weakened, no back-doors need to be introduced, and no pre-encryption interception needs to be implemented. The proof-of-work-protected key allows the law enforcement organization to reconstruct the secret key based on the proof-of-work-protected key by performing cryptographic work and decrypting the encrypted communication with the reconstructed secret key or with a reconstructed further secret key generated with the reconstructed secret key.

This execution of cryptographic work requires resources from the law enforcement organization and unauthorized third parties, e.g., processing power (cf bitcoin/blockchain "proof-of-work"), storage space, time or other. For instance, if the second user ("Bob") rotates his secret key every ten minutes, then the law enforcement organization and the unauthorized third parties would need to execute the required cryptographic work every ten minutes to continue accessing the second user's ("Bob's") communications. This effectively protects Bob's communications against unauthorized third parties, as they cannot eavesdrop even if they manage to intercept the proof-of-work-protected key.

Moreover, the law enforcement organization will not perform this cryptographic work without a proper justification. On top of that, law enforcement organization will need to consider what communication they would like to decrypt and what communication they will not decrypt, because the decryption of more communication will cost more effort. In this way, the invention serves as a technical proportionality measure to prevent law enforcement organization too easy access to citizens' communications.

The secret key may be a private key of the second user. The method may further comprise deriving a public key of the second user from the private key of the second user. The method may further comprise generating a zero-knowledge proof that the proof-of-work-protected key is derived from the private key of the second user, providing the public key of the second user to the system of the law enforcement organization, and providing the zero-knowledge proof to the system of the law enforcement organization. This technically prohibits the second user (Bob) from passing a fake proof-of-work-protected key without getting detected.

The communication may be decrypted with the further secret key and the further secret key may be a symmetric key generated based on at least the private key of the second user, a public key of the first user, and the public key of the second user. The symmetric key may be a session key that is used in a so-called hybrid cryptosystem. Hybrid cryptosystems use asymmetric encryption to establish a session key, e.g. by performing a Diffie-Hellman key exchange. Examples of hybrid cryptosystems are SSL/TLS, SSH, IPSec, and the Signal-protocol (Whatsapp).

Alternatively, the secret key may be a symmetric key generated based on at least private input of the second user and public input used by both the first user and the second user. The symmetric key may be a session key or a pairwise master key with which a session key is generated. The private input may comprise a private key of the second user and the public input may comprise a public key of the first user and a public key of the second user, for example. In this case, the symmetric key is typically a session key used in a hybrid cryptosystem.

The method may further comprise generating a zero-knowledge proof that the proof-of-work-protected key is derived from the symmetric key and providing the zero-knowledge proof to the system of the law enforcement organization. This technically prohibits the second user (Bob) from passing a fake proof-of-work-protected key without getting detected.

The method may comprise encrypting a further communication with the symmetric key and providing the encrypted further communication to the system of the first user. Thus, the symmetric key may be used for encrypting and decrypting communications between the first and second users in both directions. In this case, the zero-knowledge proof may be generated such that it proves that the further communication was encrypted with the symmetric key. This extended zero-knowledge proof technically prohibits the second user (Bob) from encrypting a communication to the first user (Alice) with a symmetric key (e.g. a session key) that is not known to the law enforcement organization without getting detected.

If, alternatively, communications would be encrypted with the public key of the recipient, then both a proof-of-work-protected key derived from the private key of the first user and a proof-of-work-protected key derived from the private key of the second user would need to be provided to law enforcement to enable decryption of encrypted communications in both directions.

In a second aspect of the invention, a method of lawfully intercepting an encrypted communication at a system of a law enforcement organization comprises receiving a proof-of-work-protected key associated with a second user, the proof-of-work-protected key having been derived from a secret key, the secret key being reconstructable with less cryptographic work with the proof-of-work-protected key than without the proof-of-work-protected key, intercepting an encrypted communication from a first user to the second user or from the second user to the first user, reconstructing the secret key based on the proof-of-work-protected key by performing cryptographic work, and decrypting the encrypted communication with the reconstructed secret key or with a reconstructed further secret key generated based on the reconstructed secret key. The method may be performed by software running on a programmable device. This software may be provided as a computer program product.

The secret key may be a private key of the second user, for example. In this case, the encrypted communication may be encrypted with a public key derived from the private key or encrypted with a further secret key that is e.g. a session key. The encrypted communication may then be decrypted with the reconstructed secret key, i.e. the reconstructed private key, or the reconstructed further secret key, i.e. the reconstructed session key, respectively.

Alternatively, the secret key may be a session key generated with the private key of the second user, for example. In this case, the encrypted communication would normally be encrypted with the secret key, i.e. the session key. The encrypted communication may then be decrypted with the reconstructed secret key, i.e. the reconstructed session key.

The method may further comprise receiving a public key associated with the second user, receiving a zero-knowledge proof from a system of the second user, and verifying, based on the proof-of-work-protected key and the public key associated with the second user, whether the zero-knowledge proof proves that the proof-of-work-protected key was indeed derived from the secret key. This method may be performed by a public key cryptography system or by a hybrid cryptosystem, for example.

The method may further comprise receiving a further public key associated with the first user and verifying, based on the proof-of-work-protected key, the public key, and the further public key, whether the zero-knowledge proof proves that the proof-of-work-protected key was indeed derived from the secret key. This method may be performed with a hybrid cryptosystem, for example. The secret key may be the private key of the second user or a session key generatable with this private key, for example.

The method may further comprise reconstructing the secret key based on the proof-of-work-protected key if the zero-knowledge proof proves that the proof-of-work-protected key was indeed derived from the secret key. An administrator at the law enforcement organization may be alerted if the zero-knowledge does not prove that the proof-of-work-protected key was indeed derived from the secret key, and legal action may then be initiated by the administrator.

If the secret key is a symmetric key and the encrypted communication is from the second user to the first user, the method may further comprise receiving a zero-knowledge proof from a system of the second user, and verifying, based on the proof-of-work-protected key, whether the zero-knowledge proof proves that the proof-of-work-protected key was indeed derived from the symmetric key and the communication was indeed encrypted with the symmetric key.

An administrator at the law enforcement organization may be alerted if the zero-knowledge proof does not prove that the communication was encrypted with the symmetric key, and legal action may then be initiated by the administrator.

In a third aspect of the invention, a system for enabling lawful interception of an encrypted communication comprises at least one processor configured to generate a secret key for a second user, derive a proof-of-work-protected key from the secret key, the secret key being reconstructable with less cryptographic work with the proof-of-work-protected key than without the proof-of-work-protected key, provide the proof-of-work-protected key to a system of a law enforcement organization, receive an encrypted communication from a system of a first user, and decrypt the encrypted communication with the secret key or with a further secret key generated based on the secret key.

In a fourth aspect of the invention, a system for lawfully intercepting an encrypted communication comprises at least one processor configured to receive a proof-of-work-protected key associated with a second user, the proof-of-work-protected key having been derived from a secret key, the secret key being reconstructable with less cryptographic work with the proof-of-work-protected key than without the proof-of-work-protected key, intercept an encrypted communication from a first user to the second user or from the second user to the first user, reconstruct the secret key based on the proof-of-work-protected key by performing cryptographic work, and decrypt the encrypted communication with the reconstructed secret key or with a reconstructed further secret key generated based on the reconstructed secret key.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

A non-transitory computer-readable storage medium stores at least a first software code portion, the first software code portion, when executed or processed by a computer, being configured to perform executable operations for enabling lawful interception of an encrypted communication.

The executable operations comprise generating a secret key for a second user, deriving a proof-of-work-protected key from the secret key, the secret key being reconstructable with less cryptographic work with the proof-of-work-protected key than without the proof-of-work-protected key, providing the proof-of-work-protected key to a system of a law enforcement organization, receiving, at a system of the second user, an encrypted communication from a system of a first user, and decrypting the encrypted communication with the secret key or with a further secret key generated based on the secret key.

A non-transitory computer-readable storage medium stores at least a second software code portion, the second software code portion, when executed or processed by a computer, being configured to perform executable operations for lawfully intercepting an encrypted communication at a system of a law enforcement organization.

The executable operations comprise receiving a proof-of-work-protected key associated with a second user, the proof-of-work-protected key having been derived from a secret key, the secret key being reconstructable with less cryptographic work with the proof-of-work-protected key than without the proof-of-work-protected key, intercepting an encrypted communication from a first user to the second user or from the second user to the first user, reconstructing the secret key based on the proof-of-work-protected key by performing cryptographic work, and decrypting the encrypted communication with the reconstructed secret key or with a reconstructed further secret key generated based on the reconstructed secret key.

As will be appreciated by one skilled in the art, aspects of the present invention may be embodied as a device, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit", "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations, sequence diagrams and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s).

It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### BRIEF DESCRIPTION OF THE DRAWINGS

These and other aspects of the invention are apparent from and will be further elucidated, by way of example, with reference to the drawings, in which:
Fig. 1 is a sequence diagram of first embodiments of the methods;
Fig. 2 is a sequence diagram of second embodiments of the methods;
Fig. 3 shows an example of ZKP generation in a first implementation of the second embodiments of the methods;
Fig. 4 shows an example of ZKP verification in the first implementation of the second embodiments of the methods;
Fig. 5 shows an example of ZKP generation in a second implementation of the second embodiments of the methods;
Fig. 6 shows an example of ZKP verification in the second implementation of the second embodiments of the methods;
Fig. 7 shows an example of ZKP generation in a third implementation of the second embodiments of the methods;
Fig. 8 shows an example of ZKP verification in the third implementation of the second embodiments of the methods;
Fig. 9 is a flow chart of a third embodiment of the method of lawfully intercepting an encrypted communication;
Fig. 10 is a block diagram of first embodiments of the systems;
Fig. 11 is a block diagram of second embodiments of the systems; and
Fig. 12 is a block diagram of an exemplary data processing system for performing the methods of the invention.

Corresponding elements in the drawings are denoted by the same reference numeral.

### DETAILED DESCRIPTION OF THE DRAWINGS

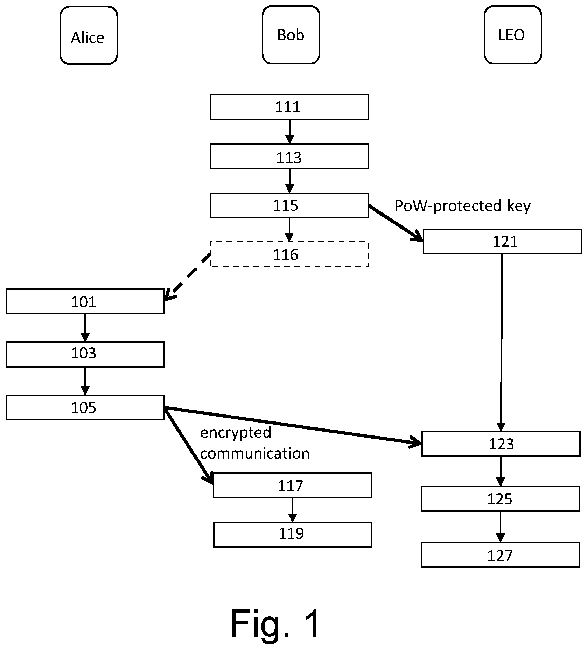

First embodiments of the methods are shown in Fig. 1. In Fig. 1, three roles are distinguished:
- Alice (the first user), who wants to send an encrypted communication to Bob;
- Bob (the second user), who wants to receive the encrypted communication from Alice;
- Law Enforcement Organization (LEO), which wants to lawfully intercept the encrypted communication between Alice and Bob.

A step 111 comprises generating a secret key for the second user (Bob). The secret key may be rotated, for example, at regular time intervals, e.g. every 10 minutes, every hour, every day or every month. Alternatively, the secret key may be rotated for every new communication session, for example. Alternatively, a different secret key may be generated for every different communication application, for example. Alternatively, the secret key may be rotated at every message, or after ten messages, or after 100 messages, for example.

A step 113 comprises deriving a proof-of-work-protected key (also referred to as "PoW-protected key") from the secret key. The proof-of-work-protected key is associated with the second user (Bob). The secret key is reconstructable with less cryptographic work with the proof-of-work-protected key than without the proof-of-work-protected key. A step 115 comprises providing the proof-of-work-protected key to a system of the law enforcement organization. To improve protection of metadata of the second user (Bob) with respect to law enforcement, the proof-of-work-protected key may be sent to the system of the law enforcement organization via a third party, thereby hiding the IP-address of the second user (Bob) for law enforcement. A step 121 comprises the system of the law enforcement organization receiving the proof-of-work-protected key associated with the second user (Bob).

An optional step 116 comprises the system of the second user (Bob) providing information to the system of the first user (Alice). A step 101 comprises the system of the first user (Alice) obtaining at least one of the secret key, a further secret key, and a public key associated with the second user (Bob). The public key may be comprised in the information provided by the system of the second user (Bob) in step 116, for example. The secret key and/or the further secret key may be generated based on the information provided by the system of the second user (Bob) in step 116, for example. If it is the secret key that is obtained in step 101, it is generated independently by the system of the first user (Alice).

A step 103 comprises encrypting the communication with the secret key, with the further secret key, or with the public key obtained in step 101. A step 105 comprises transmitting the encrypted communication to the system of the second user (Bob). A step 117 comprises receiving, at the system of the second user (Bob), the encrypted communication from the system of the first user (Alice). A step 119 comprises the system of the second user (Bob) decrypting the encrypted communication with the secret key generated in step 111 or with the further secret key. If the encrypted communication is decrypted with the further secret key, the further secret key was generated independently by the system of the second user (Bob) based on the secret key, e.g. in step 111 or in a separate step.

The proof-of-work-protected key, which is provided to the system of the law enforcement organization, is always derived from the secret key, but whether the communication needs to be decrypted with the secret key or with a further secret key, and what exactly the secret key is, depends on the implementation, as shown in Table 1 below:

**Table 1**

| **Communication is encrypted with:** | **Communication is decrypted with:** | **Secret key is:** | **Further secret key is:** |
|---|---|---|---|
| Bob's public key | Secret key | Bob's private key | - |
| Secret key | Secret key | Session key | - |
| Further secret key | Further secret key | Bob's private key | Session key |
| Further secret key | Further secret key | Pairwise master key | Session key |

The pairwise master key and the session key are symmetric keys. If a symmetric key is used, the symmetric key used by the second user (Bob) is generated based on at least private input of the second user (Bob) and public input used by both the first user (Alice) and the second user (Bob). The symmetric key used by the first user (Alice) is generated based on at least private input of the first user (Alice) and public input used by both the first user (Alice) and the second user (Bob). A symmetric key may be used by more than two users. In that case, the symmetric key is generated based at least on public input used by all these users (in addition to at least the private input of the second user). In a hybrid cryptosystem, the private input is a private key and the public input comprises the public keys of all involved users. There are many methods for generating, exchanging and managing symmetric keys known to the skilled person.

Step 116 may comprise providing the public key of the second user (Bob) to the system of the first user (Alice). This public key may be used to encrypt the communication or as part of the public input used to generate the secret key or the further secret key, i.e. a symmetric key. Public-private key systems like RSA, El Gamal, Elliptic-curve cryptographic variants, the Paillier cryptosystem, Pretty-good-privacy (PGP), or TLS may be used, for example. The step of deriving a public key of the second user (Bob) from the private key of the second user (Bob) is not shown in Fig. 1.

A step 123 comprises the system of the law enforcement organization intercepting the encrypted communication from the first user (Alice) to the second user (Bob). If a symmetric key is used, communication from the second user (Bob) to the first user (Alice) may also be intercepted without requiring another proof-of-work-protected key. A step 125 comprises reconstructing the secret key based on the proof-of-work-protected key obtained in step 121 by performing cryptographic work. A step 127 comprises decrypting the encrypted communication intercepted in step 123 with the secret key reconstructed in step 125 or with a reconstructed further secret key generated (e.g. in step 125 or in a separate step) based on the secret key reconstructed in step 125.

The proof-of-work-protected key may be derived by encrypting the secret key with a symmetric encryption algorithm (e.g. AES, Twofish, Serpent, Camellia, Salsa20, ChaCha20, Blowfish, CAST5, Kuznyechik, RC4, DES, 3DES, Skipjack, Safer, or IDEA) and a short encryption key ("randomness input"), for example.

In the following example, law enforcement needs to perform Bitcoin-like cryptographic work. In this example, Bob generates a private key ("secret key") of 1024 bits based on a public key infrastructure in step 111. Of those 1024 bits, Bob shares only the first 974 bits (the proof-of-work-protected key) with law enforcement in step 115 (so no optional randomness input is specified). In this example, Bob also derives a public key, which he shares with law enforcement and Alice in steps 115 and 116, respectively. Alice encrypts a message to Bob with Bob's public key in step 103. Bob decrypts the message with his private key in step 119. Law enforcement intercepts Alice's message to Bob and makes a digital copy in step 123.

Law enforcement could then brute force try out any possible combinations for the 50 missing bits and check whether the candidate reconstructed secret key is a private key that matches with Bob's public key. This would take up to 2^50 (~1.1 × 10^15, "1.1 million billion") attempts, and at average half of that number. Depending on the "mining hardware" of law enforcement, each attempt could take e.g., 1 picosecond at 2 nanojoules. So, a single decryption would then take around 20 minutes and cost around 25 eurocents, presuming an electricity cost of around 50 eurocents per kilowatt hour. Obviously, all of these numbers are dependent on local cost structures (e.g. hardware cost, hardware capacity, electricity use, electricity price) and they are tunable.

Decryption time may be lowered by putting more hardware in parallel, using ASICs (application specific integrated circuit) or specific algorithms that exploit features of the key-type used (e.g., RSA encryption keys have a lot of structure, 1024-bit RSA keys are estimated to have approximately "80 bits of security" ). By deriving the proof-of-work-protected key from the secret key be encrypting it with a timelock puzzle, the cryptographic work becomes non-parallelizable. This is beneficial for the environment, as using more CPU power does not result in a faster performance of the cryptographic work. Furthermore, the time required to perform the cryptographic work can typically be configured better.

Decryption cost and time could be lowered by legally requiring Bob to surrender more bits of each private key. The value of the number of to-be-surrendered bits could be determined and updated by law, regulation or policy, or by other publicly visible means. In another example, the proof-of-work-protected key is derived by inverting six bits of the secret key and not disclosing which are the inverted bits. "1024-choose-5"= 9 x 10^12 ("9 thousand billion") attempts, so the number of attempts of the cryptographic work is significantly lower than in the previous example. A technical benefit of this other example is the higher complexity of the cryptographic work, hence requiring more time but less energy.

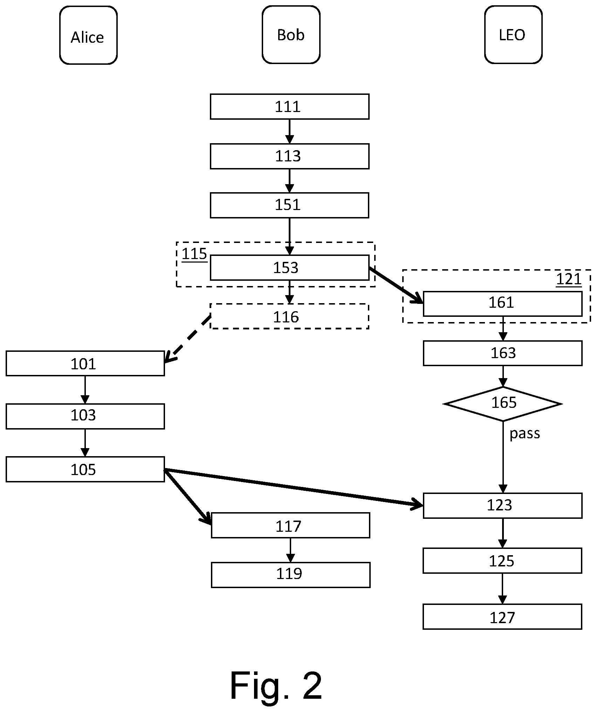

Second embodiments of the methods are shown in Fig. 2. The embodiments of Fig. 2 are an extension of the embodiments of Fig. 1. In the embodiments of Fig. 2, the second user (Bob) provides a zero-knowledge proof (ZKP) to law enforcement that his PoW-protected key was indeed derived from his secret key. This technically prohibits Bob from passing a fake PoW-protected key without getting detected.

A zero-knowledge proof requires an NP problem. An NP problem depends on an underlying decision problem (output is True or False), with two inputs: a 'witness' and optionally a set of 'parameters'. This underlying decision problem needs to be computable in Polynomial time (with respect to the total length of the inputs). The corresponding NP problem is then another decision problem. An NP problem asks, for a given underlying decision problem and corresponding set of parameters, whether there exists a witness the underlying problem will accept (i.e. that will make the underlying problem return True).

A zero-knowledge proof for such an NP problem will then allow someone who knows an `accepting witness' to prove that to someone else, without leaking any information about the witness (other than the fact that a witness exists). There are known ZKP systems that work for NP-complete problems (e.g. ZK-Snarks). Hence any NP problem admits a ZKP.

NP problems can also be described in a different way. Rather than specifying a witness, the parameters, and the underlying problem, the following parts can be defined:
- A secret input
- A shared input (that might be empty)
- A shared output
- A `cryptographic process' function that takes the secret input and shared input and produces the shared output.

This cryptographic process needs to be deterministic. In practice, this means any randomness used is considered part of the secret input. Moreover, the cryptographic process needs to be computable in Polynomial time (with respect to the total length of the inputs).

The parts can then be transformed into an underlying problem. The secret input forms the witness, the shared input and output form the parameters, and the decision problem is whether the output of the cryptographic process with the given secret and shared input will return the shared output.

An actual ZKP has two roles: a prover and a verifier. In the non-interactive setting, the prover generates a proof (a string of text) for a specific NP problem and specific parameters, given a witness. The verifier can then take this proof, and verify that the person who generated that proof indeed knows a witness for the specific NP problem and set of parameters. In an interactive setting, the prover and verifier go through an interactive process, at the end of which the verifier is convinced the prover indeed knows the witness. In the embodiments described below, unless stated otherwise, the zero-knowledge proofs are non-interactive.

In the embodiments of Fig. 2, a step 151 is performed after step 113. Step 151 comprises generating a zero-knowledge proof that, if the secret key is the private key of the second user, the proof-of-work-protected key is derived from the private key of the second user or, if the secret key is a symmetric key, the proof-of-work-protected key is derived from the symmetric key.

Next, a step 153 comprises providing the proof-of-work-protected key derived in step 113 and the zero-knowledge proof generated in step 151 to the system of the law enforcement organization. Step 153 may further comprise providing the public key of the second user to the system of the law enforcement organization.

A step 161 comprises the system of the law enforcement organization receiving the proof-of-work-protected key associated with the second user (Bob) and the zero-knowledge proof from the system of the second user (Bob). Step 161 may further comprise receiving the public key of the second user from the system of the second user (Bob). A step 163 comprises the system of the law enforcement organization verifying, based on the proof-of-work-protected key, and optionally the public key associated with the second user, whether the zero-knowledge proof proves that the proof-of-work-protected key was indeed derived from the secret key.

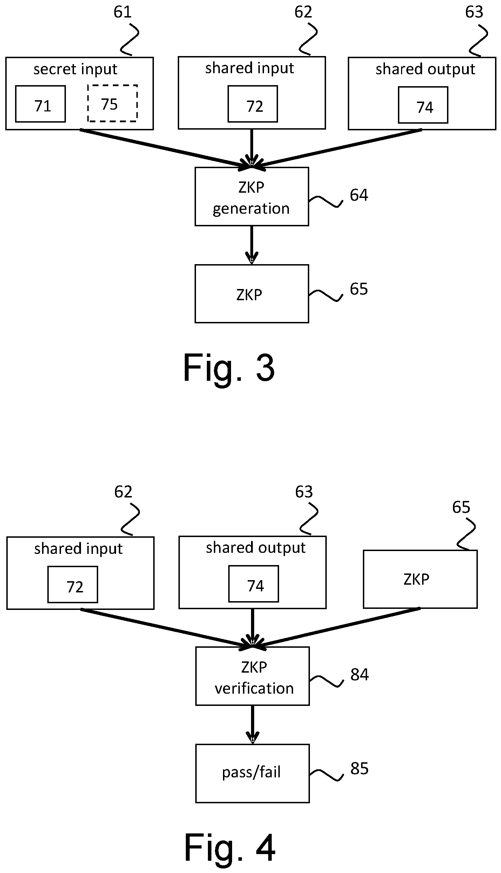

Fig. 3 shows an example of ZKP generation in a first implementation of the second embodiments of the methods. In Figs. 3-8, a ZKP involves a cryptographic process function that takes secret input 61 and shared input 62 and produces shared output 63. To generate the ZKP 65, the ZKP generation process 64 receives the secret input 61, the shared input 62, and the shared output 63.

In the implementation of Fig. 3, the secret key is the private key of the second user (Bob). The communication may be encrypted with the public key of the second user (Bob) by the system of the first user (Alice) and decrypted with the private key of the second user (Bob) by the system of the second user (Bob), for example. To generate the ZKP 65, the secret input 61 comprises the private key 71 of the second user (Bob) and optional randomness input 75, the shared input 62 comprises the public key 72 of the second user (Bob), and the shared output 63 comprises the proof-of-work-protected key 74 (derived from the private key of the second user).

Fig. 4 shows an example of ZKP verification in the first implementation of the second embodiments of the methods. To verify the ZKP 65, the ZKP verification process 84 receives the shared input 62, the shared output 63, and the ZKP 65 and produces a result 85. The result 85 indicates whether the ZKP 65 has passed or failed the verification. As mentioned in relation to Fig. 3, the shared input 62 comprises the public key 72 of the second user (Bob) and the shared output 63 comprises the proof-of-work-protected key 74.

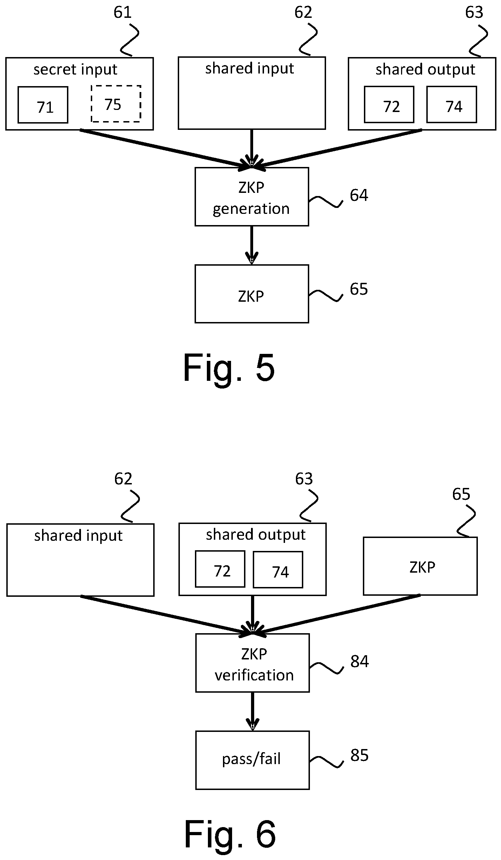

Fig. 5 shows an example of ZKP generation in a second implementation of the second embodiments of the methods. In the implementation of Fig. 5, the secret key is again the private key of the second user (Bob), the secret input 61 comprises the private key 71 of the second user (Bob) and optional randomness input 75, and the shared output 63 comprises the public key 72 of Bob and the proof-of-work-protected key 74 (derived from the private key of the second user), and no shared input is used.

Fig. 6 shows an example of ZKP verification in the second implementation of the second embodiments of the methods. As mentioned in relation to Fig. 5, the shared output 63 comprises the public key 72 of Bob and the proof-of-work-protected key 74 and no shared input is used.

The private key mentioned in relation to Figs. 3-6 may be used for public key encryption. Instead of using public key encryption, symmetric keys may be used for the actual encryption of messages. The technical benefit of symmetric keys is their higher performance: lower encryption and decryption delays, lower power use, and lower hardware/software footprint. Often, symmetric keys are derived from public and private keys. However, with a Diffie-Hellman key exchange, the first user (Alice) and the second user (Bob) can derive a pairwise master key in such a way that it does not necessarily require a certified public/private key pair. Here, Alice combines her private key with Bob's public key, and Bob combines his private key with Alice's public key, to each derive the same pairwise master key. The terms public/private keys are used for the sake of simplicity, but in Diffie-Hellmann in its simplest form, exponentiation of some secret values known to the first user (Alice) and/or the second user (Bob) is performed.

Whereas this pairwise master key itself could be used for symmetric encryption, often further symmetric keys ("session key") are derived from the pairwise master key to enable key rotation and thereby making the cryptographic work to be performed more finetuned, as fewer work needs to be performed for smaller amounts of encrypted communication, while never using (and potentially compromising) the pairwise master key for encryption. The Diffie-Hellmann key exchange does not necessarily include a certified public/private key pair.

If the secret key is a symmetric key, step 163 may comprise verifying, based on the proof-of-work-protected key, the public key associated with the second user, and a further public key associated with the first user, whether the zero-knowledge proof proves that the proof-of-work-protected key was indeed derived from the symmetric key. The step of obtaining the public key associated with the first user (Alice) is not shown in Fig. 2.

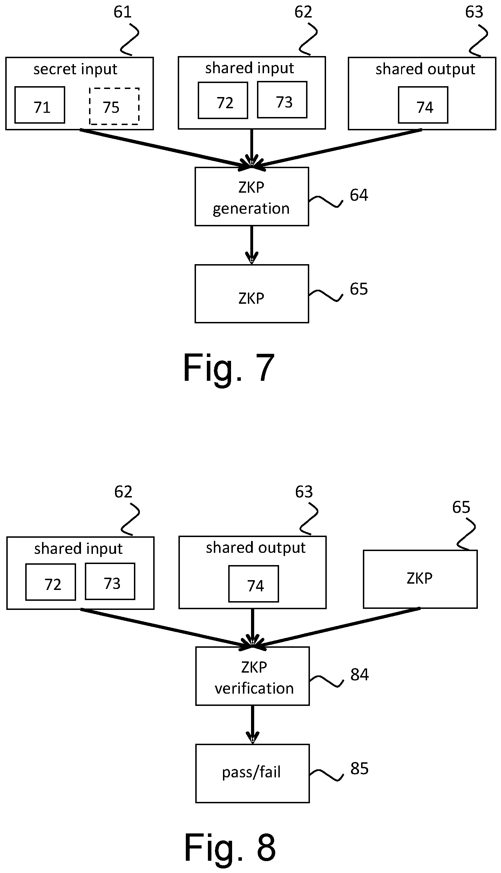

Fig. 7 shows an example of ZKP generation in a third implementation of the second embodiments of the methods. In the implementation of Fig. 7, the secret key is a symmetric key generated based on at least private input of the second user (Bob) and public input used by both the first user (Alice) and the second user (Bob). In the implementation of Fig. 7, the private input comprises a private key of the second user (Bob) and the public input comprises a public key of the first user (Alice) and a public key of the second user (Bob).

To generate the ZKP 65, the secret input 61 comprises the private key 71 of the second user (Bob) and optional randomness input 75, the shared input 62 comprises the public key 72 of the second user (Bob) and the public key 73 of the first user (Alice), and the shared output 63 comprises the proof-of-work-protected key 74 (derived from the symmetric key).

Fig. 8 shows an example of ZKP verification in the third implementation of the second embodiments of the methods. As mentioned in relation to Fig. 7, the shared input 62 comprises the public key 72 of the second user (Bob) and the public key 73 of the first user (Alice) and the shared output 63 comprises the proof-of-work-protected key 74.

In the implementation of Figs. 7 and 8, the proof-of work-protected key is derived from the symmetric key (i.e. the symmetric key is the secret key). The symmetric key may be a pairwise master key or a session key. Alternatively, the symmetric key is generated based on the private key of the second user and the proof-of work-protected key is derived from the private key of the second user (i.e. the private key of the second user is the secret key). In this alternative, symmetric keys are also used for the actual encryption and the ZPK may be generated and verified as shown in Figs. 3 and 4 or Figs. 5 and 6.

A step 165 comprises checking whether the verification of the zero-knowledge proof passed or failed. If the verification of the zero-knowledge proof passed, then step 123 is performed next, and the method proceeds as shown in Fig. 2 and described in relation to Fig. 1. If the verification of the zero-knowledge proof failed, then steps 123-127 are not performed.

In the embodiment of Fig. 2, the verification of the zero-knowledge proof is performed by the system of the law enforcement organization (in step 163). In an alternative embodiment, the verification may be performed by a network operator or by user equipment. The verifier may then send the result of the verification to the system of the law enforcement organization (possibly upon request).

In the embodiments of Fig. 2, the generation of the zero-knowledge proof is performed by the system of the second user (Bob) (in step 151). In an alternative embodiment, generation of the zero-knowledge proof may be performed by a network operator if the network operator has knowledge of all relevant secret input used by the second user (Bob). A technical benefit for the second user (Bob) to have the network operator as the prover, is that the second user (Bob) does not have to generate the ZKP himself, which saves time/bandwidth.

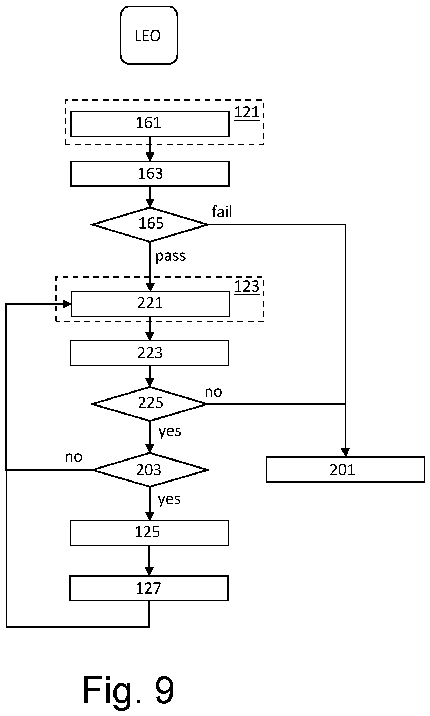

A third embodiment of the method of lawfully intercepting an encrypted communication is shown in Fig. 9. The embodiment of Fig. 9 is an extension of the embodiment of Fig. 2.

Step 161 comprises the system of the law enforcement organization receiving the proof-of-work-protected key associated with the second user (Bob) and the zero-knowledge proof from the system of the second user (Bob). Step 161 may further comprise receiving the public key of the second user from the system of the second user (Bob). Step 163 comprises the system of the law enforcement organization verifying, based on the proof-of-work-protected key, and optionally the public key associated with the second user, whether the zero-knowledge proof proves that the proof-of-work-protected key was indeed derived from the secret key.

Step 165 comprises checking whether the verification of the zero-knowledge proof passed or failed. If the verification of the zero-knowledge proof failed, a step 201 is performed. Step 201 comprises triggering an alarm. The law enforcement organization can then take action to remedy the situation. One action would be for the law enforcement organization to request the second user (Bob) to repeat the process until a valid ZKP is provided. A more invasive action would be to enforce blocking of all messages to and/or from the second user (Bob).

If the verification of the zero-knowledge proof passed, then step 221 is performed next. Step 221 comprises the system of the law enforcement organization intercepting a message comprising the encrypted communication from the first user (Alice) to the second user (Bob), which has been signed with the first user's (Alice's) private key.

Step 223 comprises the system of the law enforcement organization obtaining the published public key for the first user (Alice) which may have been used previously to successfully verify the ZKP in step 163. Step 225 comprises checking whether the message to the second user has been signed with the first user's private key by using the published public key of the first user obtained in step 223. If so, then step 203 is performed next. If not, then step 201 is performed.

Step 203 comprises determining whether there is a need to decrypt the encrypted communication intercepted in step 221. If so, step 125 is performed. If not, step 221 is repeated for subsequent messages from the first user (Alice), and the method proceeds as shown in Fig. 9. Step 221 is also repeated for subsequent messages from the first user (Alice) after step 127 has been performed.

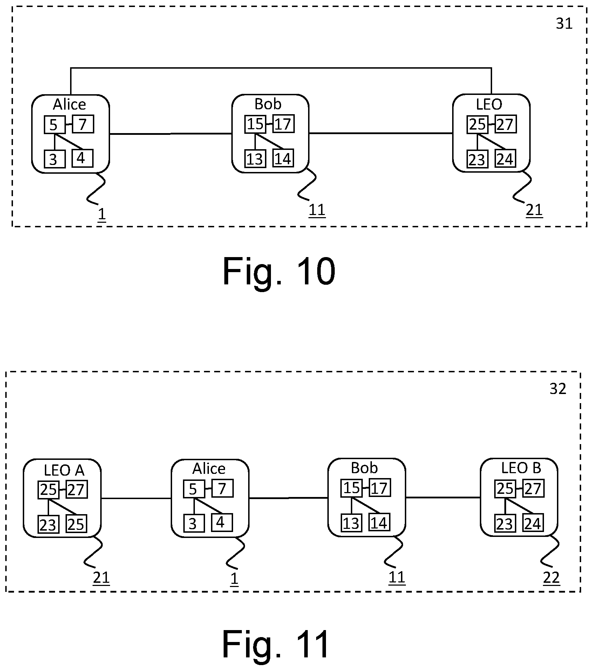

First embodiments of the systems are shown in Fig. 10. The system 1 of the first user (Alice) encrypts a communication for lawful interception. The system 11 of the second user (Bob) enables lawful interception of the encrypted communication. The system 21 of the law enforcement organization lawfully intercepts the encrypted communication. Systems 1, 11, and 21 are part of a communication system 31.

The system 11 of the second user (Bob) comprises a receiver 13, a transmitter 14, a processor 15, and a memory 17. The processor 15 is configured to generate a secret key for a second user and derive a proof-of-work-protected key from the secret key. The secret key is reconstructable with less cryptographic work with the proof-of-work-protected key than without the proof-of-work-protected key. The processor 5 is further configured to transmit, via the transmitter 14, the proof-of-work-protected key to the system 21, receive an encrypted communication from the system 1, and decrypt the encrypted communication with the secret key or with a further secret key generated based on the secret key.

The processor 15 may further be configured to generate a zero-knowledge proof that the proof-of-work-protected key is derived from the secret key of the second user and transmit, via the transmitter 14, the zero-knowledge proof to the system 21.

The system 1 of the first user (Alice) comprises a receiver 3, a transmitter 4, a processor 5, and a memory 7. The processor 5 is configured to obtain at least one of a secret key, a further secret key, and a public key associated with a second user, encrypt the communication with the secret key, with the further secret key, or with the public key, and transmit, via transmitter 4, the encrypted communication to the system 11.

The system 21 of the law enforcement organization comprises a receiver 23, a transmitter 24, a processor 25, and a memory 27. The processor 25 is configured to receive, via receiver 23, a proof-of-work-protected key associated with a second user. The proof-of-work-protected key has been derived from a secret key which is reconstructable with less cryptographic work with the proof-of-work-protected key than without the proof-of-work-protected key. The processor 25 is further configured to intercept an encrypted communication from a first user to the second user or from the second user to the first user, reconstruct the secret key based on the proof-of-work-protected key by performing cryptographic work, and decrypt the encrypted communication with the reconstructed secret key or with a reconstructed further secret key generated based on the reconstructed secret key.

The processor 25 may further be configured to receive, via the receiver 23, a public key associated with the second user and zero-knowledge proof from the system 11 and verify, based on the proof-of-work-protected key and the public key associated with the second user, whether the zero-knowledge proof proves that the proof-of-work-protected key was indeed derived from the secret key.

In the embodiments shown in Fig. 10, the systems 1, 11, and 21 comprise one processor 5, one processor 15, and one processor 25, respectively. In an alternative embodiment, one or more of the systems 1, 11, and 21 comprise multiple processors. The processors 5, 15, and 25 may be general-purpose processors, e.g., ARM, Qualcomm, AMD, or Intel processors, or application-specific processors. The processors 5, 15, and 25 may run Google Android, Apple iOS, a Unix-based operating system or Windows as operating system, for example.

The receivers 3, 13, and 23 and the transmitters 4, 14, and 24 of the systems 1, 11, and 21, respectively, may use one or more wired or wireless communication technologies such as Ethernet, Wi-Fi, LTE, and/or 5G New Radio to communicate with other devices on the Internet via an access point/base station, or they may use in-person communication like Bluetooth, Wi-Fi direct, QR-code, or a dead drop solution to communicate with other devices. The receiver and the transmitter of a system may be combined in a transceiver. The systems 1, 11, and 21 may comprise other components typical for a computer system.

(Secure) hardware, software, firmware, or combinations thereof) may be technically certified to comply to legal requirements for lawful intercept and/or provide a (zero-knowledge) proof to law enforcement that they have not been tampered with.

Second embodiment of the systems are shown in Fig. 11. The embodiments of Fig. 11 are variants on the embodiments of Fig. 10. In the embodiments of Fig. 10, both the systems 1 and 11 transmit their zero-knowledge proof to the system 21 of the same law enforcement organization (LEO).

In the embodiments of Fig. 11, the system 1 of the first user (Alice) transmits its second zero-knowledge proof to a system 21 of a first law enforcement organization (LEO A) and the system 11 of the second user (Bob) transmits its zero-knowledge proof to a system 22 of a second law enforcement organization (LEO B). The first user (Alice) falls under the jurisdiction of the first law enforcement organization. The second user (Bob) falls under the jurisdiction of the second law enforcement organization. Systems 1, 11, 21, and 22 are part of a communication system 32.

As mentioned earlier, a hybrid cryptosystem may be used in certain implementations. A hybrid cryptosystem is a protocol between two or more parties that allows a sending party to communicate to a set of receiving parties. The aim of a hybrid cryptosystem is at least to enable confidential communication through a non-confidential channel (i.e. a channel where untrusted adversaries can also listen). Optionally, hybrid cryptosystems may also enable confidential communication through a channel where adversaries could potentially modify messages.

Some well-known hybrid cryptosystems are SSL/TLS (used by HTTPS), PGP, IPsec, Wireguard, the signal protocol (used by WhatsApp), Hybrid Public Key Encryption (RFC 9180), and S/MIME.

The hybrid cryptosystem protocol consists of two parts: key encapsulation, and data-encapsulation. The first part, key encapsulation, uses asymmetric cryptography to derive a shared secret between all parties. From this shared secret, an encryption-key (called a session key) is derived.

Some hybrid cryptosystems are 'non-ephemeral' for one or more parties. That means the key encapsulation part re-uses a private key in such a way that access to the private key allows anyone to retrieve the session key based on having captured the communication during the key encapsulation part. Optionally, this part of the protocol can also be used to authenticate the identities of some or all other parties. This helps protect against adversaries who can modify messages.

The key encapsulation part of the protocol has the following form:
∘ N-participants
∘ Input:
   - Each participant has private input (e.g. a private key, or randomness)
   - There is public input that is the same for all participants
∘ Output:
   - A shared secret the same for all participants
   - Optional additional information (e.g. whether all parties were authenticated); may be different per participant.

After the key encapsulation part, a hybrid cryptosystem uses the session key in a conventional symmetric cryptographic setting. This is called data-encapsulation. This generally has two roles: a sender and a receiver. The data-encapsulation part of the protocol has the following form for the sender role:
∘ Input:
   - encryption parameters
   - message
   - session key
   - other_secret_input (e.g. randomness)
∘ Output:
   - encrypted message

The data-encapsulation part of the protocol has the following form for the receiver role:
∘ Input:
   - encryption parameters
   - encrypted message
   - session key
∘ Output:
   - message
   - optional metadata

To defend against dishonest parties, a ZKP may be used, as will be discussed below. There are at least four options for enabling interception of the encrypted communication (assuming system 32 of Fig. 11):

### Option 1 - LEO-B (Law enforcement with jurisdiction over Bob) demands access to each session key.

In this option, the secret key from which the PoW-protected key is derived is the session key. The ZKP can be used to prove that the PoW-protected key sent by Bob was indeed derived from the session key that resulted from the key encapsulation part of the protocol. This ZKP has the following form:
- The cryptographic process is:
   ∘ Bob's part of the key encapsulation part of the protocol and computing the PoW-protected key in manner A (i.e. deriving the PoW-protected key from the session key).
- The shared input is:
   ∘ The public input to the key encapsulation part of the protocol.
   ∘ All communication received by Bob during the key encapsulation part of the protocol.
- The secret input is:
   ∘ Bob's private input
- The shared output is:
   ∘ All communication sent by Bob during the key encapsulation part of the protocol
   ∘ The PoW-protected key (derived from the session key, which is the shared secret which is output of the key encapsulation part of the protocol).
   ∘ Any optional metadata.

### Option 2 - LEO-A (Law enforcement with jurisdiction over Alice) demands access to each session key.

This is the same as option 1 ('LEO-B demands access to each session key'), but with Bob replaced by Alice.

### Option 3 - LEO-B demands access to Bob's private input

This option is beneficial if the key encapsulation for Bob is non-ephemeral. In this case, the secret key is Bob's private input, e.g. Bob's private key. This is similar to option 1 ('LEO-B demands access to each session key'), but now with the secret key being Bob's private input instead of the session key. Here, a per-session ZKP may be used to prove that the PoW-protected key shared with LEO-B has been derived from Bob's private input. This ZKP has the following form:
- The cryptographic process is:
   ∘ Bob's part of the key encapsulation part of the protocol and computing the PoW-protected key in manner B (i.e. deriving the PoW-protected key from Bob's private input).
- The shared input is:
   ∘ The public input to the key encapsulation part of the protocol.
   ∘ All communication received by Bob during the key encapsulation part of the protocol.
- The secret input is:
   ∘ Bob's private input
- The shared output is:
   ∘ All communication sent by Bob during the key encapsulation part of the protocol.
   ∘ The PoW-protected key (derived from Bob's private input, which is the secret input used by the key encapsulation part of the protocol).
   ∘ Any optional metadata.

### Option 4 - LEO-A demands access to Alice's private input

This option is beneficial if the key encapsulation for Alice is non-ephemeral. In this option, the secret key is Alice's private input, e.g. Alice's private key. Here, a per-session ZKP may be used to prove that the PoW-protected key shared with LEO-A has been derived from Alice's private input. This ZKP is the same as in option 3, but with Bob replaced by Alice.

In options 1 and 2, the ZKP may be extended to prove that the sender really did use the session key for the encryption. The ZKP may be extended by adding the following aspects:
- Added to the cryptographic process:
   ∘ The data encapsulation sender part of the protocol.
- Added to the shared input:
   ∘ Encryption parameters.
   ∘ All communication received during the data encapsulation sender part of the protocol.
- Added to the secret input:
   ∘ The message.
- Added to the shared output:
   ∘ The encrypted message.
   ∘ All communication originating from the sender during the data encapsulation part of the protocol.

In option 1, the extended ZKP (generated by Bob) may then comprise the following aspects:
- The cryptographic process is:
   ∘ Generating the PoW-protected secret key.
   ∘ The data encapsulation sender part of the protocol.
- The shared input is:
   ∘ The public input to the key encapsulation part of the protocol.
   ∘ All communication received by Bob during the key encapsulation part of the protocol.
   ∘ Encryption parameters.
   ∘ All communication received by Bob as sender during the data encapsulation part of the protocol.
- The secret input is:
   ∘ The private input of Bob.
   ∘ The other_secret_input.
   ∘ The message.
- The shared output is:
   ∘ All communication originating from Bob during the key encapsulation part of the protocol.
   ∘ All communication originating from Bob during the data encapsulation part of the protocol.
   ∘ The PoW-protected key.
   ∘ The encrypted message.
   ∘ Any optional metadata.

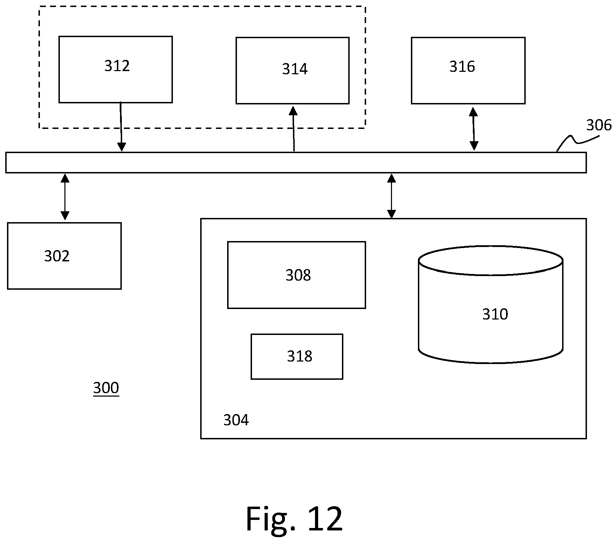

The ZKPs can, for many specific cases, be reduced (with less secret input, shared input, or shared output). Fig. 12 depicts a block diagram illustrating an exemplary data processing system that may perform the method as described with reference to Figs. 1-2 and 9.

As shown in Fig. 12, the data processing system 300 may include at least one processor 302 coupled to memory elements 304 through a system bus 306. As such, the data processing system may store program code within memory elements 304. Further, the processor 302 may execute the program code accessed from the memory elements 304 via a system bus 306. In one aspect, the data processing system may be implemented as a computer that is suitable for storing and/or executing program code. It should be appreciated, however, that the data processing system 300 may be implemented in the form of any system including a processor and a memory that is capable of performing the functions described within this specification.

The memory elements 304 may include one or more physical memory devices such as, for example, local memory 308 and one or more bulk storage devices 310. The local memory may refer to random access memory or other non-persistent memory device(s) generally used during actual execution of the program code. A bulk storage device may be implemented as a hard drive or other persistent data storage device. The processing system 300 may also include one or more cache memories (not shown) that provide temporary storage of at least some program code in order to reduce the number of times program code must be retrieved from the bulk storage device 310 during execution.

Input/output (I/O) devices depicted as an input device 312 and an output device 314 optionally can be coupled to the data processing system. Examples of input devices may include, but are not limited to, a keyboard, a pointing device such as a mouse, a camera, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in Fig. 12 with a dashed line surrounding the input device 312 and the output device 314). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 316 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 300, and a data transmitter for transmitting data from the data processing system 300 to said systems, devices and/or networks. Modems, cable modems, and Ethernet cards are examples of different types of network adapter that may be used with the data processing system 300.

The network adapter 316 may allow the data processing system to connect to the Internet, e.g. via Wi-Fi or Ethernet, and/or directly to nearby devices, e.g. via Bluetooth, Wi-Fi-Direct or Ultrasound. Data may also be exchanged between other devices and the data processing system in another way, e.g. by enabling the data processing system to scan a QR code displayed on another device and/or by enabling the data processing system to display a QR code for scanning by another device.

As pictured in Fig. 12, the memory elements 304 may store an application 318. In various embodiments, the application 318 may be stored in the local memory 308, he one or more bulk storage devices 310, or separate from the local memory and the bulk storage devices. It should be appreciated that the data processing system 300 may further execute an operating system (not shown in Fig. 12) that can facilitate execution of the application 318. The application 318, being implemented in the form of executable program code, can be executed by the data processing system 300, e.g., by the processor 302. Responsive to executing the application, the data processing system 300 may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 302 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope of the present invention. The embodiments were chosen and described in order to best explain the principles and some practical applications of the present invention, and to enable others of ordinary skill in the art to understand the present invention for various embodiments with various modifications as are suited to the particular use contemplated.

## Claims

1. A method of enabling lawful interception of an encrypted communication, the method comprising:
- generating (111) a secret key for a second user;
- deriving (113) a proof-of-work-protected key from the secret key, the secret key being reconstructable with less cryptographic work with the proof-of-work-protected key than without the proof-of-work-protected key;
- providing (115) the proof-of-work-protected key to a system of a law enforcement organization;
- receiving (117), at a system of the second user, an encrypted communication from a system of a first user; and
- decrypting (119) the encrypted communication with the secret key or with a further secret key generated based on the secret key.

2. A method as claimed in claim 1, wherein the secret key is a private key of the second user and further comprising deriving a public key of the second user from the private key of the second user.

3. A method as claimed in claim 2, further comprising:
- generating (151) a zero-knowledge proof that the proof-of-work-protected key is derived from the private key of the second user,
- providing (153) the public key of the second user to the system of the law enforcement organization, and
- providing (153) the zero-knowledge proof to the system of the law enforcement organization.

4. A method as claimed in claim 2 or 3, wherein the communication is decrypted with the further secret key and the further secret key is a symmetric key generated based on at least the private key of the second user, a public key of the first user, and the public key of the second user.

5. A method as claimed in claim 1, wherein the secret key is a symmetric key generated based on at least private input of the second user and public input used by both the first user and the second user.

6. A method as claimed in claim 5, wherein the private input comprises a private key of the second user and the public input comprises a public key of the first user and a public key of the second user.

7. A method as claimed in claim 5 or 6, further comprising:
- generating (151) a zero-knowledge proof that the proof-of-work-protected key is derived from the symmetric key, and
- providing (153) the zero-knowledge proof to the system of the law enforcement organization.

8. A method as claimed in claim 7, further comprising:
- encrypting a further communication with the symmetric key, and
- providing the further communication to the system of the first user, and wherein the zero-knowledge proof is generated such that it proves that the further communication was encrypted with the symmetric key.

9. A method of lawfully intercepting an encrypted communication at a system of a law enforcement organization, the method comprising:
- receiving (121) a proof-of-work-protected key associated with a second user, the proof-of-work-protected key having been derived from a secret key, the secret key being reconstructable with less cryptographic work with the proof-of-work-protected key than without the proof-of-work-protected key;
- intercepting (123) an encrypted communication from a first user to the second user or from the second user to the first user;
- reconstructing (125) the secret key based on the proof-of-work-protected key by performing cryptographic work; and
- decrypting (127) the encrypted communication with the reconstructed secret key or with a reconstructed further secret key generated based on the reconstructed secret key.

10. A method as claimed in claim 9, further comprising:
- receiving (161) a public key associated with the second user;
- receiving (161) a zero-knowledge proof from a system of the second user; and
- verifying (163), based on the proof-of-work-protected key and the public key associated with the second user, whether the zero-knowledge proof proves that the proof-of-work-protected key was indeed derived from the secret key.

11. A method as claimed in claim 10, further comprising:
- receiving (161) a further public key associated with the first user; and
- verifying (163), based on the proof-of-work-protected key, the public key, and the further public key, whether the zero-knowledge proof proves that the proof-of-work-protected key was indeed derived from the secret key.

12. A method as claimed in claim 9, wherein the secret key is a symmetric key, the encrypted communication is from the second user to the first user, and the method further comprises:
- receiving a zero-knowledge proof from a system of the second user; and
- verifying, based on the proof-of-work-protected key, whether the zero-knowledge proof proves that the proof-of-work-protected key was indeed derived from the symmetric key and the communication was indeed encrypted with the symmetric key.

13. A computer program or suite of computer programs comprising at least one software code portion or a computer program product storing at least one software code portion, the software code portion, when run on a computer system, being configured for performing any one of the methods of claims 1 to 12.

14. A system (11) for enabling lawful interception of an encrypted communication, the system comprising at least one processor (15) configured to:
- generate a secret key for a second user,
- derive a proof-of-work-protected key from the secret key, the secret key being reconstructable with less cryptographic work with the proof-of-work-protected key than without the proof-of-work-protected key,
- provide the proof-of-work-protected key to a system (21,22) of a law enforcement organization,
- receive an encrypted communication from a system (1) of a first user, and
- decrypt the encrypted communication with the secret key or with a further secret key generated based on the secret key.

15. A system (21,22) for lawfully intercepting an encrypted communication, the system comprising at least one processor (25) configured to:
- receive a proof-of-work-protected key associated with a second user, the proof-of-work-protected key having been derived from a secret key, the secret key being reconstructable with less cryptographic work with the proof-of-work-protected key than without the proof-of-work-protected key,
- intercept an encrypted communication from a first user to the second user or from the second user to the first user,
- reconstruct the secret key based on the proof-of-work-protected key by performing cryptographic work, and
- decrypt the encrypted communication with the reconstructed secret key or with a reconstructed further secret key generated based on the reconstructed secret key.
